# FASCICULE DE BREVET EUROPEEN

(11) **EP 3 010 691 B1**
(45) Date de publication et mention de la délivrance du brevet: **31.05.2023**
(21) Numéro de dépôt: 14736989.6
(22) Date de dépôt: 12.06.2014
(51) Int. Cl.: B27D 5/00

(54) **PROCEDE DE BORDURAGE DE PANNEAUX COMPOSITES, RUBAN POUR LA MISE EN OEUVRE DU PROCEDE ET PANNEAU OBTENU PAR CE PROCEDE**
KANTENANLEIMUNGSVERFAHREN FÜR KOMPOSITPLATTEN, BESCHICHTUNGSKANTE UND KOMPOSITPLATTEN
EDGEBANDING PROCESS FOR COMPOSITE PANELS, BAND FOR THIS PROCESS, PANEL MADE BY THIS PROCESS

(30) Priorité: 20.06.2013 FR 1355837
(43) Date de publication de la demande: 27.04.2016
(73) Titulaire: Les Stratifies, 75008 Paris (FR)
(72) Inventeur: LE LAY, Loïc, F-62144 Acq (FR); BACLET, Laurent, F-02200 Belleu (FR); SCAGNETTI, Julien, F-60420 Maignelay Montigny (FR)
(74) Mandataire: Gevers & Orès
(86) Numéro de dépôt international: PCT/IB2014/062169
(87) Numéro de publication internationale: WO 2014/203128

(56) Documents cités:
- EP-A1- 2 145 755
- WO-A1-99/14449
- WO-A1-2012/076164
- DE-A1- 2 357 051
- FR-A1- 2 489 352
- FR-A1- 2 703 362
- JP-A- H0 960 189
- US-A- 3 011 932
- US-A- 5 527 420
- US-A1- 2004 175 516

## Description

L'invention concerne un procédé de bordurage étanche de panneaux composites pouvant être utilisés comme planchers ou éléments d'habillage de parois intérieures d'avion.

Dans de nombreux secteurs et, notamment, l'aéronautique, le gain de poids est une préoccupation majeure pour améliorer l'efficacité énergétique des appareils.

Le gain de poids est généralement en contradiction avec l'autre préoccupation majeure des ces secteurs : la résistance mécanique.

Dans l'exemple d'un aéronef, de nombreux éléments sont constitués de matériaux composites alliant un poids faible et une résistance mécanique accrue.

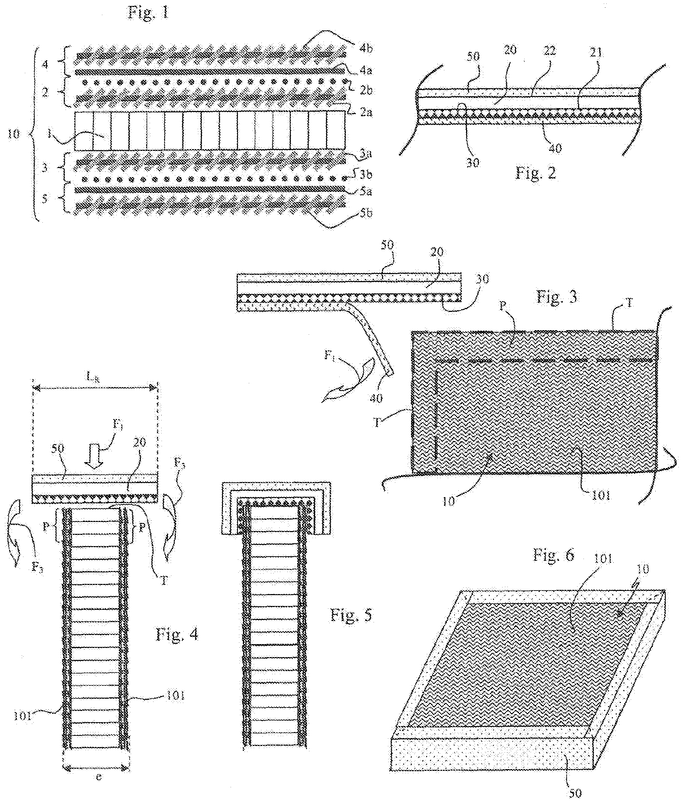

Actuellement, les planchers ou les éléments d'habillage de parois sont majoritairement composés de panneaux composites comprenant une âme centrale en nid d'abeille (ou « nida »), et deux « peaux » fixées de part et d'autre du nida. Ces peaux comprennent une ou plusieurs couches de matériaux identiques ou différents, tel qu'illustré à la figure 1.

Sur cette figure, le panneau illustré comprend :
- une âme 1 en nid d'abeille en poly(p-phénylènetéréphtalamide), de part et d'autre de laquelle sont disposées deux peaux comprenant chacune :
- un pli interne 2, 3 en contact avec l'âme 1 en nid d'abeille, et comprenant :
   - un tissu 2a, 3a de fibre de verre E imprégné d'au moins 70% en poids de résine époxy, et de masse inférieure ou égale à 30 g/m², le tissu 2a, 3a étant en contact avec l'âme 1 en nid d'abeille ; et
   - une nappe 2b, 3b de fibres de carbone unidirectionnelles orientées selon une première direction, de module d'élasticité compris entre 275 et 300 GPa, de masse inférieure ou égale à 100 g/m², et pré imprégnée entre 30% et 40 % en poids d'une résine époxy;
- un pli externe 4, 5, en contact avec le pli interne 2, 3 correspondant, comprenant :
   - une nappe 4a, 5a de fibres de carbone unidirectionnelles orientées selon une deuxième direction différente de la première direction de la nappe 2b, 3b de fibres de carbone du pli interne 2, 3, de module d'élasticité compris entre 275 et 300 GPa, de masse inférieure ou égale à 100 g/m², et pré imprégnée entre 30% et 40 % en poids d'une résine époxy, la nappe 4a, 5a de fibres de carbone unidirectionnelles de chaque pli externe 4, 5 étant en regard de la nappe 2b, 3b de fibres de carbone unidirectionnelles du pli interne correspondant 2, 3 ; et
   - un tissu 4b, 5b de fibre de verre E de masse inférieure ou égale à 30 g/m², et pré imprégné d'au moins 70% en poids de résine époxy.

D'autres panneaux composites peuvent être bordurés avec le procédé selon l'invention.

Actuellement, le bordurage d'un panneau composite est mis en oeuvre par l'utilisation d'une résine de bordurage bi-composant de type CF230/238 de chez Axson^{©} possédant une densité de 0,68 (680 kg/m³).

Afin de garantir une résistance mécanique et une tenue suffisantes, cette résine oblige un trépanage de l'âme en nid d'abeille du composite sur une profondeur d'au moins 3mm. L'état de surface de la résine est obtenu en passant une spatule plate pour lisser le bordurage mais il est souvent nécessaire de repasser en usinage pour assurer une finition acceptable.

Afin d'améliorer le temps de séchage de la résine, il est nécessaire de passer l'ensemble du composite en étuve pendant 5 heures.

Le procédé de l'état de la technique présente donc les inconvénients suivants :
- une masse de l'ensemble au mètre linéaire trop élevée (20 g au mètre pour un panneau d'épaisseur 10mm).
- l'obligation d'usiner le nid d'abeille en préparation de l'application de la résine.
- un temps de séchage / passage en étuve très long et nécessitant un entreposage adapté.
- l'usinage facultatif, mais quasiment toujours mis en oeuvre, du bordurage en résine pour obtenir l'état de surface demandé par les constructeurs.

On connaît aussi des procédés de bordurage d'un panneau composite plus rapides que celui présenté précédemment. C'est par exemple le cas dans le document WO 2012/076164A1. Dans ce procédé, on fournit un panneau composite d'épaisseur déterminée présentant deux faces planes, une tranche à bordurer, on fournit aussi un ruban en matériau polymère de largeur supérieure à l'épaisseur du panneau composite, et on applique le ruban collé par un adhésif sur toute la tranche et sur une partie périphérique des faces planes du panneau composite de telle sorte que l'adhésif se situe entre le panneau composite et la face interne du ruban. Une protection rapide du panneau composite peut ainsi être obtenue.

L'invention a pour objectif de proposer un procédé de bordurage rapide, efficace et facile à mettre en oeuvre en ne demandant que peu d'étapes, et permettant d'obtenir un panneau allégé par rapport au même panneau borduré selon certains procédés de l'état de la technique.

A cette fin, l'invention a pour objet un procédé de bordurage étanche d'un panneau composite selon la revendication 1.

Selon d'autres modes de réalisation :
- on met en oeuvre l'étape (b) par une machine comprenant au moins un premier rouleau applicateur, dit « de tranche », entrant en appui contre la tranche à bordurer du panneau composite, et au moins deux rouleaux applicateurs, dits « de surface », qui entrent en appui sur la partie périphérique des faces planes du panneau composite et qui sont sensiblement perpendiculaires par rapport au rouleau de tranche.

D'autres caractéristiques de l'invention ressortiront de la description détaillée ci-après faite en référence aux dessins annexés qui représentent, respectivement :
- la figure 1, une vue schématique en coupe d'un panneau composite utilisable dans le procédé de bordurage selon l'invention ;
- la figure 2, une vue schématique en coupe d'un ruban en matériau polymère pour la mise en oeuvre du procédé selon l'invention ;
- la figure 3, une vue schématique en plan vue de dessus, d'une partie d'un panneau composite sur la tranche duquel un ruban selon l'invention est en cours de pose ;
- la figure 4, une vue schématique en coupe d'une partie d'un panneau composite sur la tranche duquel un ruban selon l'invention est en cours de pose ;
- la figure 5, une vue schématique en coupe d'une partie d'un panneau composite sur la tranche duquel un ruban selon l'invention est posé ; et
- la figure 6, une vue schématique en perspective d'un panneau composite selon l'invention, comprenant un ruban de bordurage sur toute sa tranche et sur une partie périphérique de ses deux faces planes.

L'invention est basée sur l'idée de remplacer la résine de bordurage par un ruban collé sur la tranche, mais également sur une zone périphérique du panneau. Ce ruban peut être préencollé lors de sa fabrication, ou il peut être déposé sur une couche de colle déposée, lors du bordurage, sur la tranche et sur une zone périphérique du panneau.

Le procédé de bordurage d'un panneau composite selon l'invention comprend une étape (a) de fourniture d'un panneau composite d'épaisseur e déterminée présentant deux faces planes et une tranche à bordurer, et de fourniture d'un ruban en matériau polymère de largeur L_{R} supérieure à l'épaisseur e du panneau composite.

Comme illustré en figure 2, le ruban 20 comporte une première face 21, dite « interne », et une deuxième face 22, dite « externe », par référence à la position d'utilisation.

Le procédé de bordurage comprend également une étape (b) d'application du ruban 20 et d'un adhésif 30 sur la tranche T et sur une partie périphérique P (délimitée sur la figure 3 par la zone pointillée) des faces planes 101 du panneau composite 10 de telle sorte que l'adhésif 30 se situe entre le panneau composite 10 (la tranche T et la partie périphérique P) et la face interne 21 du ruban 20.

Dans une variante de réalisation ne faisant pas partie de l'invention, le ruban fourni à l'étape (a) comprend une face interne dépourvue d'adhésif, et l'étape (b) comprenant les sous-étapes (b'1) de dépôt d'un adhésif directement sur la tranche et sur une partie périphérique des faces planes du panneau composite, et (b'2) d'application de la face interne du ruban sur la couche d'adhésif portée par la tranche et par une partie périphérique des faces planes du panneau composite.

Cette réalisation présente l'avantage de pouvoir utiliser un ruban très simple de fabrication. Néanmoins, il est nécessaire de procéder en deux passes : une passe de dépôt de l'adhésif, et une passe de dépôt du ruban.

Aussi, dans le cadre de l'invention, le ruban fourni à l'étape (a) comprend (voir la figure 2) une face interne 21 présentant une couche d'adhésif 30 préalablement déposée lors de la fabrication du ruban (par exemple par enduction) et avantageusement protégée par un film protecteur retirable 40.

Dans ce cas, l'étape (b) comprend les sous-étapes (b1) de retrait du film protecteur 40 (voir figure 3, le retrait se fait selon la flèche F1) du ruban, s'il est présent, pour mettre à nu l'adhésif, et (b2) d'application de la face interne du ruban portant la couche d'adhésif sur la tranche (voir figure 4, l'application se fait selon la flèche F2) et sur une partie périphérique des faces planes du panneau composite (voir figure 4, l'application se fait selon les flèches F3). Pour s'assurer de la fixation du ruban sur les parties périphériques P, il présente une largeur L_{R} supérieure à l'épaisseur e du panneau (voir figure 4). De préférence, le rapport entre la largeur L_{R} du ruban 20 et l'épaisseur e du panneau est compris entre 2 et 3, c'est-à-dire que la largeur de l'adhésif recouvrant les parties périphériques P est égale à au moins la moitié de l'épaisseur e du panneau au minimum et pouvant aller jusqu'à la largeur e.

De préférence, le procédé selon l'invention comprend, en outre, une étape (α) de dépôt d'un revêtement antiadhésif à base de silicone 50 sur la face externe 22 du ruban 20. Ce revêtement a pour fonction de diminuer l'adhérence de la face externe 22 du ruban 20 lors de l'ajout de ruban d'étanchéité entre les panneaux. Le but est d'éviter d'ôter accidentellement le ruban de bordurage lors du démontage du panneau.

Ainsi, la face ne portant par l'adhésif mais présentant un revêtement antiadhésif a une résistance au pelage inférieure ou égale à 1N/25mm, mesurée selon la norme ASTM D 1781.

Le traitement antiadhésif se fait après le dépôt de l'adhésif sur la face interne du ruban, justement pour que l'adhésif puisse adhérer au ruban.

Un film protecteur retirable 40 est disposé au dessus de l'adhésif afin de garantir la non-pollution de ce dernier par le traitement antiadhésif.

L'étape (α) étant mise en oeuvre avant l'étape (b).

Lorsque le panneau de bordurage 10 présente un coin saillant, le dépôt du ruban génère des plis au niveau des coins. A cette fin, le procédé comprend une étape (β) de retrait localisé du revêtement antiadhésif au niveau des coins saillants pour créer des zones localisées dépourvues de revêtement antiadhésif, et une étape (γ) de collage du ruban sur lui-même au niveau des coins dépourvus de revêtement antiadhésif. Une opération de découpe locale du ruban peut être faite pour faciliter le pliage de ce dernier.

Le revêtement antiadhésif pourra être retiré chimiquement de la surface du ruban à l'aide de produits tel que le (Méthyle - Éthyle - Cétone), le D5-Clean ou le DPLF.

Le panneau composite obtenu après la mise en oeuvre du procédé selon l'invention est illustré en figure 6 et présente un ruban de bordurage sur toute sa tranche et sur une partie périphérique de ses deux faces planes.

Un ruban particulièrement adapté à la mise en oeuvre du procédé est constitué d'un matériau polymère, de préférence du poly(téréphtalate d'éthylène) ou PET, et il comprend, sur une face, une couche d'adhésif à base acrylique protégée par un film protecteur.

Afin de limiter le poids, tout en assurant les propriétés mécaniques et esthétiques requises par les constructeurs, le ruban en PET présente avantageusement une épaisseur de 50µm ± 2µm.

L'utilisation de ce ruban permet de bordurer les panneaux composites afin de protéger le matériau d'âme de ces derniers contre la poussière, les corps étrangers ou encore la reprise d'humidité (le ruban assure l'étanchéité une fois ce dernier posé sur la tranche et la partie périphérique P des faces planes des panneaux).

On notera que ce ruban étanche présente une structure pleine, i.e. non ajourée, contrairement à un ruban sous forme de tresse ou de treillis, par exemple.

L'ensemble ruban avec son traitement antiadhésif et son adhésif de pose ne dépasse pas 115 g/m². La masse de chaque composant est la suivante :
- Ruban PET de 50µm d'épaisseur avec revêtement antiadhésif : masse de 70 g/m²
- Adhésif à base acrylique (enduction sur le PET) : masse de 45 g/m²

On considère que la masse du film protecteur n'est pas une donnée importante du fait qu'il est ôté lors de la pose.

En plus d'une masse contenue, le ruban de bordurage respecte les contraintes mécaniques et dimensionnelles suivantes pour garantir sa tenue en utilisation sur un panneau composite aéronautique :
- épaisseur de l'ensemble ruban complet (colle + film PET) : 95µm ± 2µm
- épaisseur du film PET : 50µm ± 2µm
- résistance au pelage sur une plaque d'aluminium : supérieure ou égale à 9,5 N/25mm suivant la norme ASTM D 1781.
- résistance au pelage sur une plaque d'aluminium après une semaine de vieillissement (168h) à 70°C et avec une Humidité Relative de 95% : environ 20 N/25mm suivant la norme ASTM D 1781.
- résistance au pelage sur la partie antiadhésive : inférieure ou égale à 1N/25mm suivant la norme ASTM D 1781.
- résistance à la traction (largeur 25m m) : 185N
- allongement à la rupture : inférieur ou égal à 120%.

Le ruban PET peut être décliné suivant plusieurs couleurs mais il convient, généralement, de conserver une opacité permettant de ne pas pouvoir voir au travers, l'objectif étant de cacher l'âme du panneau composite et d'apporter un supplément en qualité perçue.

Le ruban est auto extinguible suivant la norme FAR 25.853 appendice F chapitre (a)(I)(i).

Avantageusement, l'utilisation du ruban de bordurage permet de mettre en oeuvre une partie du procédé par une machine d'application dédiée.

La machine d'application permet la pose de ruban de bordurage sur la tranche d'un panneau ainsi que sur une partie périphérique P de la face supérieure et inferieure (application simultanée), dans un temps réduit via l'action d'un opérateur. Cette machine comprend pour cela au moins un premier rouleau applicateur, dit « de tranche » pour appliquer le ruban sur la tranche et au moins deux rouleaux, dits « de surface », destinés à entrer en appui sur la partie périphérique des faces planes du panneau composite, ces deux rouleaux de surface étant sensiblement perpendiculaires par rapport au rouleau de tranche en position opérationnelle, c'est-à-dire en position d'application du ruban.

En outre, la machine comporte avantageusement un système de retrait du film de protection de l'adhésif agencé avant les rouleaux pour pouvoir retirer le film de protection avant l'application du ruban.

L'application sur la totalité de la tranche du panneau est faite d'un seul tenant afin de limiter les coupes et reprises du ruban (limite les risques de perte d'étanchéité) mais aussi de limiter la perte de temps de mise en place de la machine sur le panneau.

Seul les angles subissent un traitement manuel avec le décapage de la zone de pliage (décapage chimique au M.E.C, D5-Clean ou DPLF, ou décapage mécanique) du ruban de bordurage sur lui-même par l'opérateur en fin d'opération machine :
Ce décapage est nécessaire afin de pouvoir retirer le traitement antiadhésif de la zone de pliage du ruban sur lui-même.

La table de support du panneau lors de l'application est une table sur laquelle se trouvent des ventouses pouvant être positionnées horizontalement ou verticalement (les positions intermédiaires sont aussi possibles) suivant le besoin de l'opérateur et suivant la dimension du panneau à bordurer.

Étant utilisé par un opérateur, la machine à rubaner ne dépasse pas une masse de 5kg pour pouvoir être manipulée sans soutien ou aide extérieure.

Un bras de soutien articulé et équilibré pouvant se fixer sur la machine peut être prévu pour améliorer l'ergonomie (diminution des charges maximum).

Avantageusement, la machine à rubaner possède une tête d'application de largeur adaptable qui permet de bordurer des panneaux d'épaisseurs différentes, typiquement entre 8mm à 12mm d'épaisseur.

Cette tête permet aussi de recevoir des rouleaux de rubans pouvant mesurer de 15 mm à 35 mm de large pour un rouleau complet pouvant atteindre un diamètre de 150mm (mandrin inclus dans le rouleau). Le diamètre du mandrin est de 76 mm ± 1 mm.

La machine permet une vitesse d'application du ruban pouvant aller jusqu'à 10 m/min. Lors de la pose, la machine permet de retirer automatiquement le film protecteur se trouvant sur la face adhésive du ruban afin d'apporter un gain de temps.

Le recouvrement sur la partie périphérique P des faces planes du panneau est avantageusement symétrique sur chaque face. La machine permet de respecter une tolérance de symétrie stricte tout au long de la pose avec au maximum 1mm de décalage.

L'application du ruban sur la tranche et sur la partie périphérique des deux faces planes est obligatoire sous peine du décollement du ruban. En outre, cela assure l'étanchéité du collage afin de protéger le nid d'abeille.

La fonction de ce collage complet est de permettre aussi l'application dune tension de pose pour venir tendre le ruban. Cette tension pourra être comprise entre 5N et 25N et garantira ainsi une application de qualité du ruban de bordurage (reprise, pliure, bulle...).

Grâce à l'invention, il n'est plus nécessaire d'usiner préalablement le nid d'abeille, et l'étape de pose est simplifiée, surtout si le ruban utilisé est muni d'une couche d'adhésif lors de sa fabrication.

En outre, il est possible d'accomplir une grande partie du procédé de bordurage avec l'aide d'une machine de dépose du ruban, ce qui accélère le bordurage, le rend plus constant, et plus facile à mettre en oeuvre.

Enfin, l'état de surface du bordurage n'a pas besoin d'être repris mécaniquement puisque la face extérieure du ruban remplit dès l'origine les exigences esthétiques des constructeurs, notamment les constructeurs aéronautiques.

## Revendications

1. Procédé de bordurage d'un panneau composite formant plancher ou élément d'habillage de parois intérieures d'avion **caractérisé en ce qu'**il comprend :
- une étape (a) de fourniture d'un panneau composite d'épaisseur déterminée présentant deux faces planes, une tranche à bordurer et au moins un coin saillant, et de fourniture d'un ruban en matériau polymère de largeur supérieure à l'épaisseur du panneau composite, et comportant une première face, dite « interne », et une deuxième face, dite « externe », par référence à la position d'utilisation, ladite face interne présentant une couche d'adhésif protégée par un film protecteur retirable ;
- une étape (b) d'application du ruban collé par un adhésif sur toute la tranche et sur une partie périphérique des faces planes du panneau composite de telle sorte que l'adhésif se situe entre le panneau composite et la face interne du ruban, ladite étape (b) comprenant à cet effet les sous-étapes suivantes :
• une étape (b1) de retrait du film protecteur du ruban pour mettre à nu l'adhésif,
• une étape (b2) d'application de la face interne du ruban portant la couche d'adhésif sur la tranche et sur une partie périphérique des faces planes du panneau composite ;
- une étape (α) de dépôt d'un revêtement antiadhésif sur la face externe du ruban, l'étape (α) étant mise en oeuvre avant l'étape (b).
le ruban étant ainsi apte à protéger de manière étanche le panneau composite contre des poussières, des corps étrangers ou une reprise d'humidité ;
le procédé comprenant, en outre, une étape (β) de retrait localisé du revêtement antiadhésif au niveau des coins saillants pour créer des zones localisées dépourvues de revêtement antiadhésif, et une étape (γ) de collage du ruban sur lui-même au niveau des coins dépourvus de revêtement antiadhésif.

2. Procédé de bordurage selon la revendication 1, **caractérisé en ce que** l'on met en oeuvre l'étape (b) par une machine comprenant au moins un premier rouleau applicateur ; dit « de tranche », entrant en appui contre la tranche à bordurer du panneau composite, et au moins deux rouleaux applicateurs, dits « de surface », qui entrent en appui sur la partie périphérique des faces planes du panneau composite et qui sont sensiblement perpendiculaires par rapport au rouleau de tranche.

## Patentansprüche

1. Verfahren zur Kantenleimung einer Verbundplatte, die einen Boden oder ein Verkleidungselement von Innenwänden eines Flugzeugs bildet, **dadurch gekennzeichnet, dass** es umfasst:
- einen Schritt (a) des Bereitstellens einer Verbundplatte mit einer bestimmten Dicke, die zwei ebene Seiten, einen zu kantenleimenden Teilabschnitt und mindestens eine vorragende Ecke aufweist, und des Bereitstellens eines Bandes aus Polymermaterial mit einer größeren Breite als die Dicke der Verbundplatte, und die in Bezug auf die Verwendungsposition eine erste Seite, als "Innenseite" bezeichnet, und eine zweite Seite, als "Außenseite" bezeichnet, umfasst, wobei die Innenseite eine durch einen abnehmbaren Schutzfilm geschützte Haftschicht aufweist;
- einen Schritt (b) des Auftragens des mit einem Haftstoff geklebten Bandes auf dem gesamten Teilabschnitt und auf einem Umfangsteil der ebenen Seiten der Verbundplatte auf solche Weise, dass das Haftmittel sich zwischen der Verbundplatte und der Innenseite des Bandes befindet, wobei der Schritt (b) zu diesem Zweck die folgenden Teilschritte umfasst:
- einen Schritt (b1) des Abnehmens des Schutzfilms von dem Band, um das Haftmittel freizulegen,
- einen Schritt (b2) des Auftragens der Innenseite des Bandes, die die Haftschicht trägt, auf dem Teilabschnitt und auf einem Umfangsteil der ebenen Seiten der Verbundplatte;
- einen Schritt (α) des Ablagerns einer antihaftenden Verkleidung auf der Außenseite des Bandes, wobei der Schritt (α) vor dem Schritt (b) ausgeführt wird.
wobei das Band somit geeignet ist, die Verbundplatte auf dichte Weise gegen Staub, Fremdkörper oder eine Feuchtigkeitsaufnahme abzudichten;
wobei das Verfahren weiter einen Schritt (β) der örtlichen Entnahme der antihaftenden Verkleidung an den vorragenden Ecken, um örtliche Bereiche ohne antihaftende Verkleidung zu schaffen, und einen Schritt (γ) des Klebens des Bandes auf sich selbst an den Ecken ohne antihaftende Verkleidung umfasst.

2. Verfahren zur Kantenleimung nach Anspruch 1, **dadurch gekennzeichnet, dass** der Schritt (b) von einer Maschine ausgeführt wird, die mindestens eine erste Auftragswalze, als "Teilabschnittswalze" bezeichnet, die an dem zu kantenleimenden Teilabschnitt der Verbundplatte zum Anliegen kommt, und mindestens zwei Auftragswalzen, als "Oberflächenwalzen" bezeichnet, die an dem Umfangsteil der ebenen Seiten der Verbundplatte zum Anliegen kommen und die im Wesentlichen senkrecht zur Teilabschnittswalze sind, umfasst.

## Claims

1. Method of sealingly edging a composite panel **characterised in that** it comprises:
• a step (a) providing a composite panel of specified thickness having two planar faces, a side to be edged and at least one projecting corner, and of provision of a sealing strip of polymeric material with a width greater than the thickness of the composite panel, and having a first surface, called "inner surface" and a second surface, called "outer surface" in reference to the position of use, said inner surface having a layer of adhesive protected by a removable protective film;
• a step (b) for the application of a strip stuck by an adhesive on the whole side and at a peripheral portion of the planar surfaces of the composite panel so that the adhesive is located between the composite panel and the inner surface of the strip, which sealingly protects the composite panel against dust, foreign matter or moisture uptake, said step (b) comprising to this end the following substeps:
• a step (b1) of removal of the protective film of the strip to expose the adhesive,
• a step (b2) of application to the inner surface of the strip carrying the adhesive layer on the side and on a peripheral portion of the planar surfaces of the composite panel;
• a step (α) of deposition of a non-stick coating on the outer surface of the strip, wherein the step (α) is carried out before step (b),
the strip being thus adapted to sealingly protect the composite panel against dust, foreign matter or moisture uptake;
the method further comprising a step (β) for the localised removal of the non-stick coating at the projecting corners in order to create localised zones that are free of the non-stick coating, and a step (γ) of bonding the strip on itself at the corners free of the non-stick coating.

2. Method of edging according to claim 1, **characterised in that** the step (b) is implemented by a machine comprising at least a first applicator roller, called "side roller", coming into contact with the side of the composite panel to be edged, and at least two application rollers, called "surface rollers", which come into contact with the peripheral portion of the planar surfaces of the composite panel, and which are substantially perpendicular relative to the side roller.
